# DEMANDE DE BREVET EUROPEEN

(11) **EP 1 650 056 A1**
(43) Date de publication de la demande: **26.04.2006**
(21) Numéro de dépôt: 05292151.7
(22) Date de dépôt: 13.10.2005
(51) Int. Cl.: B60C 15/028

(54) **Dispositif destiné à bloquer les talons d'une enveloppe de pneumatique contre les rebords d'une jante**

(30) Priorité: 25.10.2004 FR 0411338
(71) Demandeur: HUTCHINSON, 75008 Paris (FR)
(72) Inventeur: Ratet, Florence, 45120 Chalette sur Loing (FR); Tavin, Gérard, 45200 Montargis (FR); Finsterbusch, Michaël, Langhorne, PA 19047 (US)
(74) Mandataire: Bolinches, Michel Jean-Marie

(57) **Abrégé**

Dispositif de blocage (601) des talons (T) d'une enveloppe de pneumatique (P) contre des rebords (J1, J2) d'une jante de roue (J) sur laquelle est montée ladite enveloppe (P), ledit dispositif comprenant une structure annulaire rapportée autour de ladite jante (J), caractérisé en ce que ladite structure est allégée pour que sa masse soit inférieure à 10 kg, et en ce qu'elle comporte au moins localement des moyens (602) pour la rigidifier de sorte à accroître sa résistance mécanique à des efforts de compression exercés par lesdits talons (T) contre ladite structure.

## Description

La présente invention concerne un dispositif destiné à bloquer les talons d'une enveloppe de pneumatique contre les rebords d'une jante de roue sur laquelle est montée ladite enveloppe, ce dispositif de blocage étant notamment utilisable pour équiper un véhicule à moteur destiné à évoluer sur des sols meubles, accidentés et/ou à des pressions de gonflage réduites, tel qu'un véhicule militaire ou civil.

On connaît par le document de brevet américain US-A-5,271,443 un dispositif de blocage de type « beadlock » comportant un anneau de tôle de section en « U », sur les bords latéraux duquel sont rivetés des bourrelets annulaires en caoutchouc qui sont eux-mêmes montés sur le fond de jante et qui sont destinés à exercer un effort de pression axial sur les talons de l'enveloppe de manière à plaquer chacun des talons sur le rebord de jante destiné à l'enserrer.

Néanmoins, un inconvénient majeur de ce type de dispositif de blocage réside dans l'épaisseur de tôle relativement élevée qui est utilisée pour l'anneau, typiquement de l'ordre d'un dixième de pouce (soit plus de 2,5 mm), qui est requise pour conférer aux bords latéraux de cet anneau formant les ailes du « U » une résistance suffisante aux efforts de compression et de cisaillement exercés en roulage par les talons de l'enveloppe sur ces bords.

Il résulte de cette utilisation pour l'anneau d'une tôle relativement épaisse que le dispositif de blocage incorporant cet anneau est relativement lourd, présentant typiquement une masse de l'ordre de 10 kg, ce qui a pour effet d'alourdir les ensembles montés pourvus de ces dispositifs de blocage et, par conséquent, les véhicules équipés de ces ensembles montés. Cet alourdissement global pénalise en particulier le coût de transport des véhicules aéroportés, tels que des véhicules militaires blindés.

Le document EP-A-397 593 divulgue un dispositif de blocage des talons d'une enveloppe de pneumatique montée sur une jante de roue multiblocs, ce dispositif étant exclusivement constitué d'un anneau fendu qui est sensiblement plat en section axiale et dont les bords latéraux sont par exemple élargis, pour le rigidifier dans la direction axiale.

Un but de la présente invention est de proposer un dispositif de blocage des talons d'une enveloppe de pneumatique contre des rebords d'une jante de roue sur laquelle est montée l'enveloppe, ce dispositif comprenant une structure annulaire de masse inférieure à 10 kg qui est rapportée autour de la jante, ladite structure comportant un anneau cylindrique et, au moins localement, des moyens pour rigidifier l'anneau de sorte à accroître sa résistance mécanique à des efforts de compression exercés par les talons contre ladite structure.

A cet effet, les bords latéraux de l'anneau s'étendant de part et d'autre de sa surface cylindrique, dans un premier cas, reçoivent des moyens de liaison en un matériau élastique destinés à venir au contact des talons de l'enveloppe ou, dans un second cas, présentent des surfaces d'appui destinées à appuyer sur les talons par l'intermédiaire de moyens élastiques formés sous forme d'ondulations circonférentielles dans ledit anneau.

Avantageusement, ladite structure présente une masse inférieure ou égale à 7 kg.

Selon un mode de réalisation de l'invention se rapportant audit premier cas, ledit anneau est fendu et présente une épaisseur de matière inférieure ou égale à 8 mm, cette épaisseur pouvant être inférieure ou égale à 2 mm dans le cas d'un anneau de tôle et étant par exemple égale à 6 mm dans le cas d'un anneau en matière plastique.

Selon un exemple avantageux de l'invention relatif à ce premier cas, chaque bord latéral de l'anneau présente une section transversale en forme de « T ». De préférence, ledit anneau comporte alors une partie médiane entre lesdits bords latéraux se prolongeant sensiblement à angle droit par un tronçon qui est replié sur lui-même en formant un pli constituant le sommet dudit « T ». On notera que ce pli peut être formé d'un côté ou de l'autre du sommet du « T ».

Selon une autre caractéristique de ce premier cas selon l'invention, lesdits moyens de liaison comprennent deux bourrelets annulaires en caoutchouc qui sont respectivement montés sur lesdits bords latéraux et, avantageusement, le dispositif de blocage est alors dépourvu de moyen de fixation desdits bourrelets sur ledit anneau.

Selon une caractéristique avantageuse de l'invention relative audit premier cas, ledit anneau comporte :
- soit une pluralité de nervures formées le long des génératrices de l'anneau, lesdites nervures étant prévues pour rigidifier ledit dispositif vis-à-vis d'efforts exercés sur celui-ci dans la direction de sa largeur, ledit anneau étant alors avantageusement ajouré entre lesdits bords latéraux,
- soit une pluralité d'ouvertures sur sa circonférence et entre lesdits bords latéraux, la paroi de l'une au moins ou chacune desdites ouvertures formant une nervure sur au moins une face dudit anneau.

Selon une autre caractéristique avantageuse du mode précité de réalisation de l'invention, ledit anneau est à base d'une tôle ou d'au moins un polymère thermoplastique.

Selon une variante de réalisation de l'invention relative audit premier cas, chacune desdites nervures présente une géométrie prismatique ou cylindrique par exemple d'une hauteur totale de 15 mm, les moyens de liaison destinés à venir au contact des talons de l'enveloppe comportant une pluralité de bouchons obturant respectivement les bases creuses d'au moins plusieurs desdites nervures. On notera que plusieurs ou la totalité de ces bouchons pourraient être reliés entre eux de chaque côté dudit anneau.

Selon une autre caractéristique de cette variante selon l'invention, le dispositif de blocage est dépourvu de moyen de fixation desdits bouchons sur ledit anneau.

Selon une autre caractéristique de cette variante selon l'invention, ledit anneau est à base d'au moins un polymère thermoplastique ou bien à base d'au moins un métal.

Selon une autre variante de réalisation de l'invention relative audit premier cas, ladite structure annulaire comprend le long de ses génératrices une pluralité de tubes cylindriques ou prismatiques qui sont reliés deux à deux entre eux par au moins un élément de jonction, tel qu'un lien flexible ou un élément d'accrochage, et qui sont prévus pour rigidifier ledit dispositif vis-à-vis d'efforts exercés sur celui-ci dans la direction de sa largeur, de telle sorte que ladite structure annulaire soit de type composite.

On notera que ces tubes juxtaposés circonférentiellement peuvent être métalliques ou bien en matière plastique, et qu'ils présentent chacun par exemple une hauteur de 15 mm.

Selon un autre mode de réalisation de l'invention relatif audit second cas, dans lequel le dispositif de blocage comporte un anneau où sont formés lesdits moyens élastiques destinés à serrer directement des bords latéraux dudit anneau contre lesdits talons, chaque bord latéral présente alors une surface d'appui en forme de couronne qui est destinée à appuyer sur l'un desdits talons.

Selon une autre caractéristique de ce second cas selon l'invention, le dispositif de blocage est constitué dudit anneau, lequel est fermé.

Selon une autre caractéristique avantageuse de l'invention relative à une structure annulaire comprenant spécifiquement un anneau fendu, au moins l'une des deux extrémités de cet anneau se termine par au moins une patte destinée à solidariser lesdites extrémités l'une avec l'autre.

On notera que ladite ou chaque patte de solidarisation (i.e. de fermeture de l'anneau fendu) présente dans ce cas une structure d'un seul tenant avec l'anneau, contrairement à des moyens de fixation rapportés tels que des barrettes de liaison pourvues de vis, ce qui permet de raidir localement la zone de fermeture de l'anneau qui constitue de manière connue une zone de faiblesse de la structure annulaire, et également de limiter le nombre de pièces rapportées sur cette dernière.

Avantageusement, la largeur de ladite ou chaque patte de solidarisation est inférieure à celle dudit anneau, l'autre ou chaque extrémité se terminant par au moins une saillie radiale recourbée qui est adaptée pour rigidifier ledit anneau dans le sens de sa largeur.

Selon un exemple de réalisation de l'invention, l'une desdites extrémités se termine par ladite patte de solidarisation et l'autre extrémité se termine par une paire desdites saillies qui sont recourbées radialement.

Selon une variante de l'invention, l'une desdites extrémités se termine par ladite patte de solidarisation et l'autre extrémité se termine par une unique saillie qui est recourbée radialement et qui est ainsi continue sur la largeur dudit anneau.

Selon une autre caractéristique de l'invention, ladite patte de solidarisation est adaptée pour être fixée à ladite autre extrémité qu'elle recouvre par tout moyen de fixation mécanique ou encore par collage.

Selon une autre variante de réalisation de l'invention, on notera que l'anneau fendu peut comporter en combinaison, d'une part, ladite barrette de liaison rapportée sur lesdites extrémités pour les solidariser l'une avec l'autre et, d'autre part, au moins une desdites saillies radiales recourbées s'étendant sensiblement sur toute la largeur de l'extrémité correspondante de l'anneau pour rigidifier ledit anneau dans le sens de sa largeur.

Un ensemble monté selon l'invention est utilisable pour équiper un véhicule à moteur destiné à évoluer sur des sols meubles, accidentés et/ou à des pressions de gonflage réduites, tel qu'un véhicule militaire blindé ou un véhicule civil de type « hors-la-route », ledit ensemble monté comportant une jante de roue se terminant axialement à l'extérieur par deux rebords, et une enveloppe de pneumatique comportant des talons respectivement montés contre lesdits rebords par l'intermédiaire d'un dispositif de blocage qui est destiné à caler lesdits talons contre lesdits rebords et qui est tel que défini précédemment.

Un véhicule à moteur selon l'invention est utilisable pour évoluer sur des sols meubles, accidentés et/ou à des pressions de gonflage réduites, tel qu'un véhicule militaire blindé ou un véhicule civil de type « hors-la-route », et il est pourvu d'ensembles montés selon l'invention.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue en coupe méridienne d'un ensemble monté connu comportant une jante de roue multiblocs, une enveloppe de pneumatique montée sur ladite jante et un dispositif de blocage connu,
la figure 2 est une vue de détail en section transversale de l'un des deux bords latéraux du dispositif de blocage de la figure 1,
la figure 3 est une vue partielle en coupe circonférentielle illustrant les moyens d'assemblage connus des deux extrémités d'un dispositif fendu selon la figure 1,
la figure 4 est une vue partielle en perspective d'un dispositif de blocage selon un premier exemple de réalisation de l'invention,
la figure 5 est une vue partielle en perspective d'un dispositif de blocage selon une variante de ce premier exemple de l'invention,
la figure 6 est une vue partielle, en section selon une directrice, d'un dispositif de blocage selon une autre variante de ce premier exemple de l'invention,
la figure 7 est une vue partielle, en section selon une directrice, d'un dispositif de blocage selon une autre variante de ce premier exemple de l'invention,
la figure 8 est une vue en section transversale de l'un des deux bords latéraux des dispositifs représentés aux figures 6 ou 7,
la figure 9 est une vue partielle en section transversale de l'un des deux bords latéraux d'un dispositif de blocage selon un autre exemple de réalisation de l'invention,
la figure 10 est une vue en section transversale d'un dispositif de blocage selon un autre exemple de réalisation de l'invention qui est représenté à l'intérieur d'un ensemble monté vu en coupe méridienne, et
la figure 11 est une vue partielle en perspective et en transparence des deux extrémités d'un anneau fendu inclus dans un dispositif de blocage selon l'invention, qui sont solidarisées l'une avec l'autre.

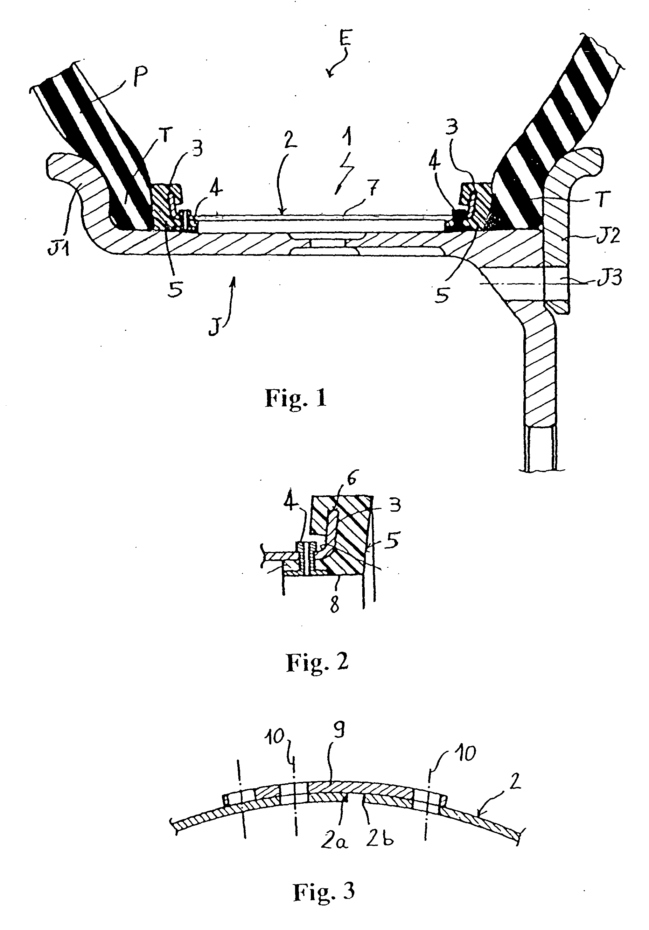

L'ensemble monté E représenté à la figure 1 correspond à l'art antérieur évoqué en préambule et comporte une jante de roue J de type multiblocs à fond plat, une enveloppe de pneumatique P montée contre les rebords J1, J2 de la jante J et un dispositif de blocage 1 des talons T de l'enveloppe E contre ces rebords J1, J2. Le dispositif de blocage 1 est constitué par une structure annulaire comprenant un anneau de tôle 2 de section droite en « U », sur les bords latéraux 3 duquel sont fixés par des rivets 4 des bourrelets annulaires 5 en caoutchouc qui sont eux-mêmes montés sur le fond de jante J et qui sont destinés à caler les talons T sur les rebords J1, J2.

Pour assurer le montage du dispositif de blocage 1 à l'intérieur de l'enveloppe P, l'anneau 2 est fendu et ses deux parties d'extrémités 2a et 2b sont ensuite solidarisées l'une à l'autre par au moins une barrette de liaison 9 les recouvrant et fixées par des vis ou analogues montées dans des trous 10 percés dans la barrette 9 et les parties d'extrémité 2a et 2b, comme cela est illustré sur la figure 3.

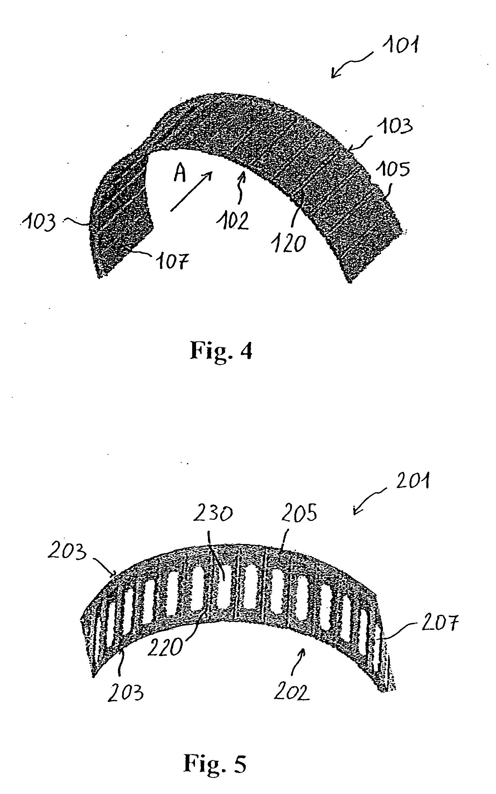

Un dispositif de blocage 101 selon l'invention est illustré à la figure 4 selon une vue en perspective partielle, et il comprend également un anneau métallique fendu 102 à section droite en « U » et comparable à l'anneau 2 de la figure 1, mais avec une épaisseur moindre de l'ordre de 1 mm et une pluralité de nervures 120 qui sont réparties régulièrement sur sa circonférence et qui sont prévues pour rigidifier l'anneau 102 en prévision de contraintes exercées par les talons T et matérialisées par la flèche A.

Les nervures 120 s'étendent parallèlement aux génératrices de l'anneau 102 et elles sont formées (par exemple usinées ou embouties) sur la face externe de l'anneau 102. Des bourrelets annulaires 5 du type de ceux de la figure 1 sont montés et fixés sur les bords latéraux 103 de l'anneau 102. Cependant, la masse de ce dispositif de blocage 101 peut être ramenée à une valeur de l'ordre de 7 kg par exemple.

Le dispositif de blocage 201 illustré à la figure 5 est une variante de celui illustré à la figure 4 qui permet d'abaisser sa masse à une valeur de 5 kg par exemple en prévoyant des ouvertures 230 dans l'anneau 202 pour l'alléger. Ces ouvertures 230 peuvent avoir des formes quelconques et être régulièrement réparties autour de l'anneau 202.

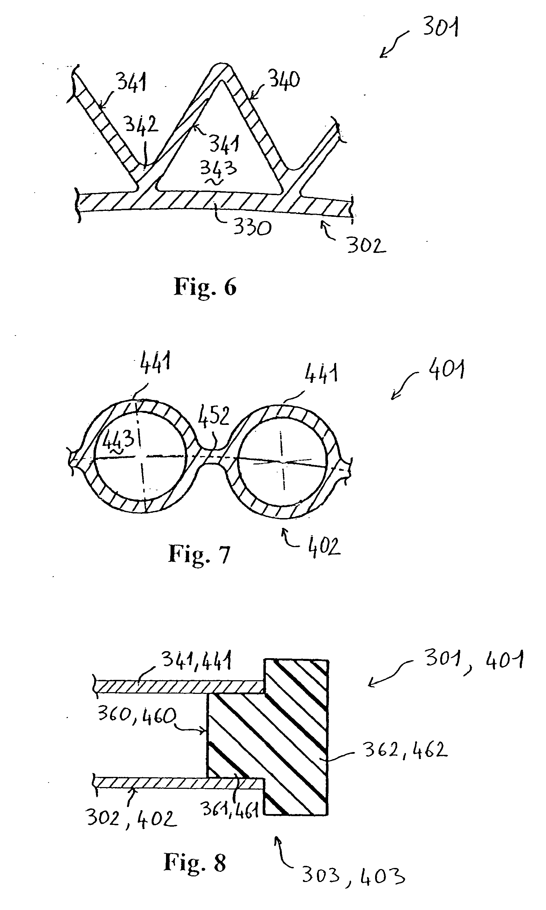

Le dispositif de blocage 301 illustré à la figure 6 est un anneau 302 fermé ou fendu et par exemple en matière plastique. Cet anneau 302 est constitué d'une paroi interne cylindrique 330, destinée à être montée sur le fond de la jante J, et d'une paroi externe 340 constituée d'une pluralité de prismes droits de rigidification 341 creux et parallèles aux génératrices de la paroi 330 qui sont régulièrement répartis sur la circonférence de l'anneau 302 et qui sont reliés deux à deux entre eux par une arête commune 342, de manière à former une chaînette.

Le dispositif de blocage 401 de la figure 7 est une variante de réalisation de celui illustré à la figure 6, l'anneau 402 étant un anneau fermé ou fendu en matière plastique. L'anneau 402 est constitué d'une pluralité de cylindres droits 441, creux et parallèles aux génératrices de l'anneau 402, qui sont régulièrement répartis sur sa circonférence et qui sont reliés deux à deux entre eux par un tronçon de liaison 452, de manière à former une chaînette. Chaque cylindre 441 est délimité par deux bases 443 vides formant les bords latéraux 403 de l'anneau 402 qui sont par exemple de forme circulaire. L'anneau 402 est destiné à être monté sur le fond de la jante J, de manière que chacun des cylindres 441 soit parallèle audit fond par l'intermédiaire de l'une de ses génératrices.

On notera que ces cylindres 441 répartis sur la circonférence de l'anneau 402 ont pour fonction de rigidifier ce dernier, à l'instar de ce qui a été exposé ci-dessus en relation avec les nervures 120, 220 et les prismes 341 de l'anneau 302 et que les anneaux 302, 402 sont chacun obtenus par exemple par moulage d'une matière plastique à base d'au moins un polymère thermoplastique, de sorte qu'ils présentent une structure fermée ou non suite à la mise en oeuvre de cette matière plastique.

On a représenté à la figure 8 l'ensemble du dispositif de blocage 301 ou 401 qui comporte, outre l'anneau 302 ou 402, des bouchons de caoutchouc 360 ou 460 obturant la base 343, 443 de chaque prisme ou cylindre 341, 441 en chacun de ses bords latéraux 303, 403 (un seul bord latéral 303, 403 est représenté à la figure 8). L'ensemble des bouchons 360 ou 460 est destiné à exercer par l'intermédiaire de l'anneau 302, 402, à l'instar des bourrelets 5 précités, un effort de serrage prédéterminé sur les talons T de l'enveloppe P tout en protégeant les talons T des bords latéraux 303 ou 403. Chaque bouchon 360 ou 460 comporte une partie interne 361 ou 461 adaptée pour être montée à force dans une base 343 ou 443, et une partie externe 362 ou 462 destinée à appuyer sur les talons T de l'enveloppe P.

On notera que chacun des dispositifs de blocage 301, 401 est avantageusement dépourvu de tout moyen de fixation des bouchons 360, 460 sur les prismes ou cylindres 341, 441, ce qui contribue à réduire sa masse. On notera que la masse du dispositif de blocage 301, 401 est encore minimisée lorsque l'anneau 302 ou 402 présente une structure fermée et est ainsi dépourvu de tout moyen d'assemblage d'extrémités d'enroulement.

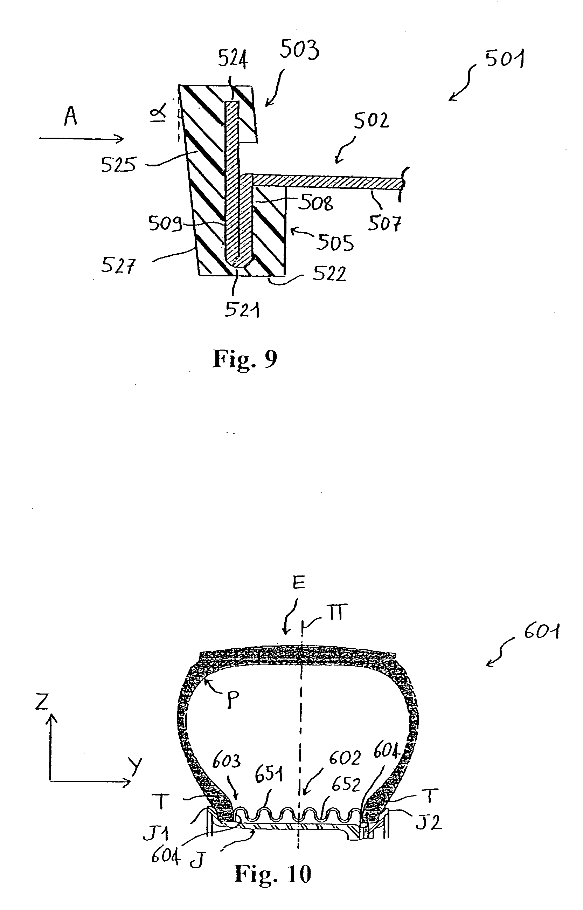

A la figure 9 est représenté un autre dispositif de blocage 501 selon l'invention qui comporte un anneau 502 fendu, sur les bords latéraux 503 duquel sont respectivement montés deux bourrelets 505 (un seul bord 503 et un seul bourrelet 505 sont visibles à la figure 9).

Chaque bord 503 présente une section transversale formant sensiblement un « T », en s'étendant de part et d'autre de la partie médiane 507 de l'anneau 502 comprise entre lesdits bords 503. Plus précisément, la partie médiane 507 se prolonge d'un côté sensiblement à angle droit par un tronçon 508, lequel est ensuite replié sur lui-même en formant un pli 509 s'étendant au-delà de la partie médiane 507, toujours sensiblement à angle droit par rapport à cette dernière. De plus, le tronçon 508 et le pli 509 présentent une même épaisseur égale à celle de la partie médiane 507, de manière que le pli 509 a pour effet de renforcer mécaniquement chaque bord latéral 503 en prévision dé contraintes matérialisées par la flèche A.

Comme cela est également visible à la figure 9, la géométrie particulière en « T » de chaque bord latéral 503 de l'anneau 502 est conçue pour recevoir le bourrelet 505 dont la section transversale est sensiblement inscrite dans un parallélogramme et dans lequel est formée une première rainure 521 adaptée pour enserrer le tronçon 508 et la partie juxtaposée en regard du pli 509. La face externe 522 de l'âme de cette rainure 521 est destinée à être montée sur le fond de la jante J. Dans ce bourrelet 505 est également formée une seconde rainure 524 adaptée pour enserrer l'extrémité libre du pli 509.

Une partie de liaison 525 du bourrelet 505 reliant entre elles les rainures 521 et 524 est conçue pour enserrer le sommet du « T » formé par ce bord latéral 503, et la face externe 527 de cette partie de liaison 525 est chanfreinée de manière à présenter un angle α avec le plan circonférentiel médian de l'anneau 502 qui soit adapté au profil de la face interne de chaque talon T de l'enveloppe P, de manière que cette face externe 527 épouse la forme de ce talon T.

On notera que le montage de la paire de bourrelets fendus 505 sur les bords 503 de cet anneau fendu 502 s'avère robuste du fait des géométries spécifiques des bords 503 et des bourrelets 505, ce qui permet de se passer de tout moyen de fixation des bourrelets 505 sur cet anneau 503 et, par conséquent, d'obtenir un dispositif de blocage 501 selon l'invention plus léger que ceux de l'art antérieur, étant uniquement constitué de l'anneau 502, des bourrelets 505 et desdites barrettes d'assemblage 9 pourvues de moyens de fixation 10.

A la figure 10 est représenté en coupe méridienne un autre dispositif de blocage 601 selon l'invention qui est monté à l'intérieur d'un ensemble monté E contre les talons T d'une enveloppe P, laquelle est montée sur une jante J par exemple multiblocs. Ce dispositif de blocage 601 est ici uniquement constitué d'un anneau fermé 602 métallique (par exemple en titane) présentant des ondulations circonférentielles (i.e. parallèles à une directrice de l'anneau 602), qui sont constituées en alternance de nervures 651 et de rainures 652, d'un bord latéral 603 à l'autre de l'anneau 602. Chaque bord latéral 603 présente une surface d'appui 604 en forme de couronne qui est parallèle à la direction radiale Z de l'ensemble monté E en s'étendant radialement vers le haut à partir de son extrémité libre 605, et qui est destinée à appuyer sur un talon T. Cette surface d'appui 604 se prolonge axialement (voir la direction axiale Y à la figure 7) pour former en alternance une nervure 651 et une rainure 652, jusqu'à une ultime nervure 651 se prolongeant axialement par une autre surface d'appui 604 identique qui est par exemple symétrique de la précédente par rapport au plan circonférentiel médian Π de l'ensemble monté E (on voit à la figure 10 que ce plan Π peut constituer un plan de symétrie pour l'anneau 602).

On notera que ces ondulations ont pour effet de conférer à l'anneau 602 une élasticité suffisante lui permettant d'exercer l'effort axial requis sur les talons T en s'affranchissant des tolérances de fabrication, notamment de l'enveloppe P, ce qui permet avantageusement de se passer de tout bourrelet annulaire de liaison entre l'anneau 602 et les talons T. Il en résulte un gain de masse significatif pour le dispositif de blocage 601 constitué de cet anneau 602. On notera que la masse du dispositif de blocage 601 constitué par cet anneau 602 est encore minimisée du fait que cet anneau 602 présente une structure fermée et est ainsi dépourvu de tout moyen d'assemblage d'extrémités d'enroulement.

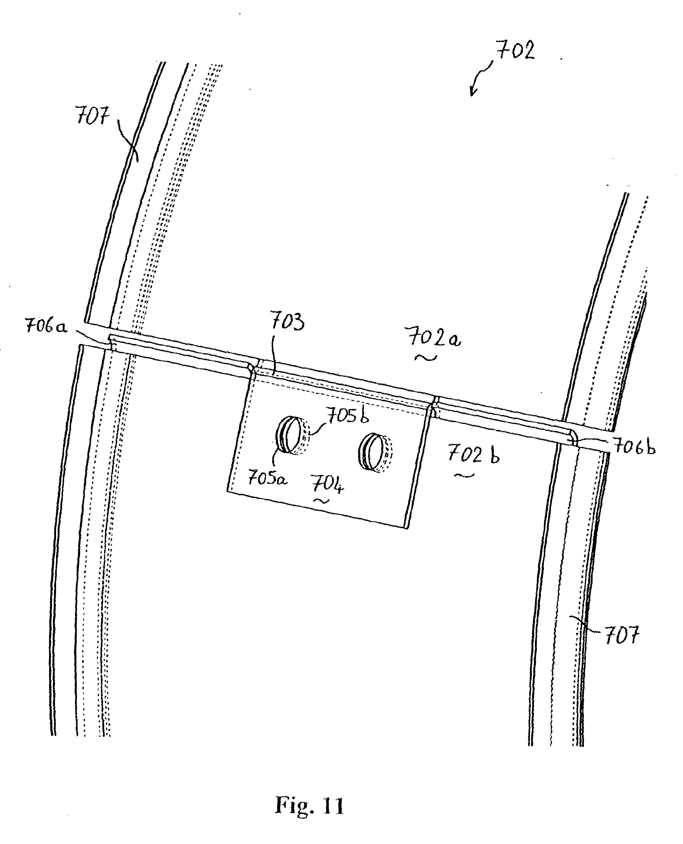

A la figure 11 est illustré une variante avantageuse de solidarisation des deux extrémités 702a et 702b d'un anneau fendu 702 selon l'invention. Cette variante se distingue essentiellement du mode de solidarisation illustré à la figure 3 en ce que l'anneau et les moyens de solidarisation utilisés sont d'un seul tenant et non pas rapportés sur ces extrémités 702a et 702b.

Dans l'exemple de la figure 11, l'une des extrémités 702a est prolongée dans la direction circonférentielle de l'anneau 702 et sur une partie de sa largeur axiale, via un léger décrochement radial 703, par une patte de solidarisation 704 qui recouvre l'autre extrémité 702b en étant centrée sur le plan circonférentiel médian de l'anneau 702. Des paires d'orifices en regard 705a et 705b sont formés à la fois dans la patte 704 et dans l'extrémité 702b qu'elle recouvre, chaque paire d'orifices 705a, 705b étant destiné à recevoir un boulon (non représenté) pour la fixation mécanique de la patte 704 à l'extrémité 702b.

Dans l'exemple de réalisation de la figure 11, cette extrémité recouverte 702b est prolongée par deux saillies 706a et 706b recourbées radialement vers l'extérieur de l'anneau 702. Ces saillies 706a et 706b s'étendent axialement de part et d'autre de la patte 704, sensiblement jusqu'aux bords latéraux 707 de l'anneau 702, et elles sont conçues pour rigidifier l'anneau 702 dans le sens de sa largeur.

On notera que ce mode de solidarisation des extrémités 702a et 702b de l'anneau fendu 702 présente l'avantage de réduire le nombre de pièces rapportées sur cet anneau 702, tout en contribuant à raidir localement la zone de fermeture de ce dernier.

D'une manière générale, on notera que les anneaux fendus 102, 202 et 502 des figures 4, 5 et 9 sont de préférence métalliques, étant obtenus à partir d'une tôle à base d'un acier de haute dureté dont la dureté, mesurée au moyen du test de Brinell, est avantageusement supérieure à 70 kg/mm² et est par exemple de l'ordre de 80 kg/mm².

Dans ce cas, chacun de ces anneaux 102, 202, 502 est obtenu à partir d'une tôle fine dont l'épaisseur est inférieure à 2 mm et est avantageusement comprise entre 0,7 mm et 1,5 mm, étant par exemple égale à 1 mm.

Selon une variante de réalisation de l'invention, ces anneaux 102, 202, 502 peuvent être à base d'au moins un polymère thermoplastique, ce qui contribue à réduire la masse des dispositifs 101, 201, 501 correspondants.

On notera par ailleurs que le montage des dispositifs de blocage 301, 401, 601 illustrés aux figures 6, 7 et 10 à l'intérieur de l'ensemble monté E peut être effectué d'une manière simplifiée, compte tenu du fait que chacun de ces dispositifs 301, 401, 601 peut présenter une structure annulaire fermée ne nécessitant pas d'opération d'assemblage d'extrémités d'enroulement.

On notera que chacun des dispositifs de blocage 101 à 601 selon l'invention présente une masse pratiquement réduite de moitié - de l'ordre de 5 kg - en comparaison de celles de l'ordre de 10 kg qui caractérisent les dispositifs de blocage 1 de l'art antérieur, notamment du fait de l'utilisation selon l'invention d'une tôle mince (d'épaisseur typiquement égale à 1 mm) ou d'un polymère thermoplastique et en outre, dans le cas de l'anneau 201 de la figure 5, du fait de la structure ajourée qui peut le caractériser.

Il résulte notamment de cette masse réduite des dispositifs de blocage 101 à 601 selon l'invention et, par conséquent, des ensembles montés E les incorporant, une minimisation substantielle du coût du transport aérien de flottes de véhicules, tels que des véhicules militaires blindés, qui sont équipés d'ensembles montés E incorporant chacun ces dispositifs de blocage 101 à 601.

On notera que les dispositifs de blocage 101 à 601 selon l'invention procurent un serrage satisfaisant des talons T de l'enveloppe de pneumatique P pour éviter une perte de motricité même à une pression de gonflage réduite à l'intérieur de ladite enveloppe P.

## Revendications

1. Dispositif de blocage (101, 201, 301, 401, 501, 601) des talons (T) d'une enveloppe de pneumatique (P) contre des rebords (J1, J2) d'une jante de roue (J) sur laquelle est montée ladite enveloppe (P), ledit dispositif comprenant une structure annulaire de masse inférieure à 10 kg qui est rapportée autour de ladite jante (J), ladite structure comportant un anneau cylindrique (102, 202, 502, 602) et, au moins localement, des moyens (120, 220, 341, 441, 509, 602) pour rigidifier ledit anneau de sorte à accroître sa résistance mécanique à des efforts de compression exercés par les talons (T) contre ladite structure, **caractérisé en ce que** les bords latéraux (503, 603) de l'anneau s'étendant de part et d'autre de sa surface cylindrique, dans un premier cas, reçoivent des moyens de liaison (360, 460, 505) en un matériau élastique destinés à venir au contact des talons (T) de l'enveloppe (P) ou, dans un second cas, présentent des surfaces d'appui (604) destinées à appuyer sur lesdits talons (T) par l'intermédiaire de moyens élastiques formés sous forme d'ondulations circonférentielles dans ledit anneau.

2. Dispositif de blocage (101, 201, 301, 401, 501, 601) selon la revendication 1, **caractérisé en ce que** ladite structure présente une masse inférieure ou égale à 7 kg.

3. Dispositif de blocage (101, 201, 501) selon la revendication 1 ou 2, **caractérisé en ce que**, dans ledit premier cas, ledit anneau (102, 202, 502) est fendu et présente une épaisseur de matière inférieure ou égale à 8 mm.

4. Dispositif de blocage (501) selon la revendication 3, **caractérisé en ce que** chaque bord latéral (503) de l'anneau (502) présente une section transversale en forme de « T ».

5. Dispositif de blocage (501) selon la revendication 4, **caractérisé en ce que** ledit anneau (502) comporte une partie médiane (507) entre lesdits bords latéraux (503) se prolongeant sensiblement à angle droit par un tronçon (508) qui est replié sur lui-même en formant un pli (509) constituant le sommet dudit « T ».

6. Dispositif de blocage (501) selon l'une des revendications 3 à 5, **caractérisé en ce que** lesdits moyens de liaison comprennent deux bourrelets annulaires (505) en caoutchouc qui sont respectivement montés sur lesdits bords latéraux (503).

7. Dispositif de blocage (501) selon la revendication 6, **caractérisé en ce qu'**il est dépourvu de moyen de fixation desdits bourrelets (505) sur ledit anneau (502).

8. Dispositif de blocage (101, 201, 301, 401) selon l'une des revendications 1 à 3, **caractérisé en ce que**, dans ledit premier cas, ledit anneau (102, 202, 302, 402) comporte une pluralité de nervures (120, 220, 341, 441) formées le long des génératrices de l'anneau (102, 202, 302, 402), lesdites nervures (120, 220, 341, 441) étant prévues pour rigidifier ledit dispositif (101, 201, 301, 401) vis-à-vis d'efforts exercés sur celui-ci dans la direction de sa largeur.

9. Dispositif de blocage (201) selon la revendication 8, **caractérisé en ce que** ledit anneau (202) est ajouré entre lesdits bords latéraux (203).

10. Dispositif de blocage selon l'une des revendications 1 à 3, **caractérisé en ce que**, dans ledit premier cas, ledit anneau comporte sur sa circonférence et entre lesdits bords latéraux une pluralité d'ouvertures, la paroi de l'une au moins ou de chacune desdites ouvertures formant une nervure sur au moins une face dudit anneau.

11. Dispositif de blocage (101, 201, 501) selon une des revendications 3 à 10, **caractérisé en ce que** ledit anneau (102, 202, 502) est à base d'une tôle ou d'au moins un polymère thermoplastique.

12. Dispositif de blocage (301, 401) selon la revendication 8, **caractérisé en ce que** chacune desdites nervures (341, 441) présente une géométrie prismatique ou cylindrique, des moyens de liaison (360, 460) destinés à venir au contact des talons (T) de l'enveloppe (P) comportant une pluralité de bouchons (360, 460) obturant respectivement les bases creuses (343, 443) d'au moins plusieurs desdites nervures (341, 441).

13. Dispositif de blocage (301, 401) selon la revendication 12, **caractérisé en ce qu'**il est dépourvu de moyen de fixation desdits bouchons (360, 460) sur ledit anneau (302, 402).

14. Dispositif de blocage (301, 401) selon la revendication 12 ou 13, **caractérisé en ce que** ledit anneau (302, 402) est à base d'au moins un polymère thermoplastique.

15. Dispositif de blocage selon la revendication 1 ou 2, **caractérisé en ce que**, dans ledit premier cas, l'anneau comprend le long de ses génératrices une pluralité de tubes cylindriques ou prismatiques qui sont reliés deux à deux entre eux par au moins un élément de jonction et qui sont prévus pour rigidifier ledit dispositif vis-à-vis d'efforts exercés sur celui-ci dans la direction de sa largeur.

16. Dispositif de blocage (601) selon la revendication 1 ou 2, **caractérisé en ce que**, dans ledit second cas, ledit anneau (602) est fermé.

17. Dispositif de blocage (601) selon la revendication 16, **caractérisé en ce que**, dans ledit second cas, ladite surface d'appui (604) de chacun desdits bords latéraux (603) présente une forme de couronne.

18. Dispositif de blocage (601) selon la revendication 17, **caractérisé en ce qu'**il est constitué dudit anneau (602).

19. Dispositif de blocage selon une des revendications 1 à 15, **caractérisé en ce que** ledit anneau est fendu (702), l'une au moins de ses deux extrémités (702a) se terminant par au moins une patte (704) destinée à solidariser lesdites extrémités (702a et 702b) l'une avec l'autre.

20. Dispositif de blocage selon la revendication 19, **caractérisé en ce que** la largeur de ladite ou chaque patte de solidarisation (704) est inférieure à celle dudit anneau (702), l'autre ou chaque extrémité (702b) se terminant par au moins une saillie radiale recourbée (706a, 706b) qui est adaptée pour rigidifier ledit anneau dans le sens de sa largeur.

21. Dispositif de blocage selon la revendication 20, **caractérisé en ce que** l'une desdites extrémités (702a) se termine par ladite patte de solidarisation (704) et **en ce que** l'autre extrémité (702b) se termine par une paire desdites saillies (706a, 706b) recourbées radialement vers l'extérieur de part et d'autre de ladite patte, ou bien par une unique saillie recourbée radialement vers l'intérieur sur la largeur de ladite patte, laquelle est adaptée pour être fixée à ladite autre extrémité qu'elle recouvre par fixation mécanique ou par collage.

22. Ensemble monté (E) utilisable pour équiper un véhicule à moteur destiné à évoluer sur des sols meubles, accidentés et/ou à des pressions de gonflage réduites, tel qu'un véhicule militaire blindé ou un véhicule civil de type « hors-la-route », ledit ensemble monté (E) comportant une jante de roue (J) se terminant axialement à l'extérieur par deux rebords (J1, J2), et une enveloppe de pneumatique (P) comportant des talons (T) respectivement montés contre lesdits rebords
(J1, J2) par l'intermédiaire d'un dispositif de blocage destiné à caler lesdits talons (T) contre lesdits rebords (J1, J2), **caractérisé en ce que** ledit dispositif de blocage (101, 201, 301, 401, 501, 601) est tel que défini à l'une des revendications précédentes.

23. Véhicule à moteur utilisable pour évoluer sur des sols meubles, accidentés et/ou à des pressions de gonflage réduites, tel qu'un véhicule militaire blindé ou un véhicule civil de type « hors-la-route », **caractérisé en ce qu'**il est pourvu d'ensembles montés (E) selon la revendication 22.
